(19) Europäisches Patentamt
European Patent Office
Office européen des brevets

(11) EP 0 709 421 A1

(12) EUROPÄISCHE PATENTANMELDUNG

(43) Veröffentlichungstag:
**01.05.1996 Patentblatt 1996/18**

(51) Int. Cl.[6]: **C08G 64/42**, C08G 64/30, C08G 64/40

(21) Anmeldenummer: **95116239.5**

(22) Anmeldetag: **16.10.1995**

(84) Benannte Vertragsstaaten:
**BE DE ES FR GB IT NL**

(30) Priorität: **28.10.1994 DE 4438545**

(71) Anmelder: **BAYER AG**
**D-51368 Leverkusen (DE)**

(72) Erfinder:
- **Kühling, Steffen, Dr.**
  **D-40670 Meerbusch (DE)**
- **Hucks, Uwe**
  **D-46519 Alpen (DE)**

# (54) Verfahren zur Herstellung von thermoplastischem Polycarbonat

(57) Gegenstand der vorliegenden Erfindung ist ein Umesterungsverfahren zur Herstellung von thermoplastischen, lösungsmittelfreien, verzweigungsarmen und restmonomerarmen Polycarbonaten.

EP 0 709 421 A1

Printed by Rank Xerox (UK) Business Services
2.11.3/3.4

## Beschreibung

Gegenstand der vorliegenden Erfindung ist ein Schmelzeverfahren zur Herstellung von lösungsmittelfreien, verzweigungsarmen, restmonomerarmen Polycarbonaten, ausgehend von einer aromatischen Dihydroxyverbindung und einem Kohlensäurediester, dadurch gekennzeichnet, daß man ein Polycarbonat mit einem OH-Endgruppengehalt von < 35 % der Gesamtendgruppen mit einer sauren Komponente versetzt und anschließend durch Partialdruckerniedrigung zu dem gewünschten restmonomerarmen Polycarbonat unter Beibehaltung des Molekulargewichts bei der Restmonomerenverminderung gelangen kann.

Die nach dem erfindungsgemäßen Verfahren hergestellten restmonomerarmen Polycarbonate sind lösungsmittelfrei, mit heller Eigenfarbe ausgestattet, thermo- und hydrolysestabil und weitgehend frei von unerwünschten Fehlstellen im Polycarbonat.

Die Herstellung von aromatischen Oligo-/Polycarbonaten nach dem Schmelzeumesterungsverfahren ist literaturbekannt.

Die Neutralisation von basischen Katalysatorsystemen durch die Zugabe von sauren Komponenten ist in der DE-OS 1 031 512 und der EP-A 435 124 beschrieben. Es wird dort aus erwähnt, daß man nach der Neutralisation durch Anlegen von Vakuum die überschüssig eingesetzte Säure entfernen (DE-OS 1 031 512) bzw. durch Zugabe von Epoxiden (EP-A 435 124) wieder neutralisieren kann.

Es wurde nun gefunden, daß man nach der Neutralisation des durch Umesterung hergestellten Polycarbonats durch Erniedrigung des Partialdrucks (z.B. Anlegen von Vakuum) eine deutliche Restmonomerenerniedrigung bei konstantem Molekulargewicht des Polycarbonats dann erreichen kann, wenn die phenolisch OH-Endgruppen-Gehalte der Polycarbonate < 35 % * sind. Übersteigen die phenolisch OH-Endgruppen-Gehalte die 35 %, so können die Restmonomerengehalte nicht entsprechend reduziert werden und außerdem tritt gleichzeitig eine unerwünschte Erhöhung des Molekulargewichts des neutralisierten Polycarbonats ein; eine Molekulargewichtskonstanz ist nicht mehr gegeben (vgl. Beispiele/Vergleichsbeispiele).

Die starke Erniedrigung von Restmonomeren ist anzustreben, da Restmonomere zu Formenbelägen auf den Verarbeitungsmaschinen bei der Verarbeitung der Polycarbonate führen. Überdies ist die Thermostabilität von Restmonomeren gering, so daß Polycarbonate mit hohen Restmonomergehalten schlechtere Thermostabilitätseigenschaften zeigen.

Der phenolische OH-Endgruppen-Gehalt der Polycarbonate ist wie folgt definiert:

$$* \qquad X\,\% = \frac{\text{Zahl der OH-Endgruppen}}{\text{Gesamtzahl der Endgruppen}} * 100$$

Die Bestimmung des OH/Arylcarbonat-Endgruppenverhältnis der Polycarbonate kann beispielsweise durch NMR-Messung oder durch IR-Messung eines Schmelzefilms oder durch on-line IR-Messung der OH- und Phenyl-Endgruppen erfolgen.

Für das erfindungsgemäße Verfahren geeignete Diphenole sind solche der Formel (I)

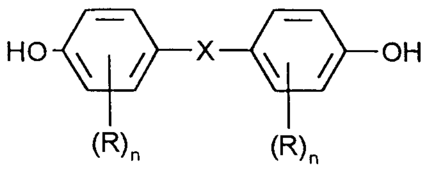

worin

X = $C_1$-$C_8$ Alkyliden oder Cycloalkyliden, S oder eine Einfachbindung und
R = $CH_3$, Cl oder Br und
n = Null, 1 oder 2 ist.

Bevorzugte Diphenole sind z.B:
4,4'-Dihydroxydiphenyl,
4,44`-Dihydroxydiphenylsulfid,
2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan,

1,1-Bis-(4-hydroxyphenyl)-cyclohexan und
1,1-Bis-(4-hydroxyphenyl)-3,3,5-trimethylcyclohexan.

Besonders bevorzugte Diphenole aus den vorstehend genannten sind 2,2-Bis-(4-hydroxyphenyl)-propan und 1,1-Bis-(4-hydroxyphenyl)-3,3,5-trimethylcyclohexan.

Die vorstehenden Diphenole können zur Herstellung von Homopolymeren oder Copolymeren eingesetzt werden.

Die Polycarbonate können durch den Einsatz geringer Mengen Verzweiger bewußt und kontrolliert verzweigt werden. Einige geeignete Verzweiger sind:
4,6-Dimethyl-2,4,6-tri-(4-hydroxyphenyl)-hepten-2,
4,6-Dimethyl-2,4,6-tri-(4-hydroxyphenyl)-heptan,
1,3,5-Tri-(4-hydroxyphenyl)-benzol,
1,1,1-Tri-(4-hydroxyphenyl)-ethan,
Tri-(4-hydroxyphenyl)-phenylmethan,
2,2,-Bis-[4,4-bis-(4-hydroxyphenyl)-cyclohexyl]-propan,
2,4-Bis-(4-hydroxyphenyl-isopropyl)-phenol,
2,6-Bis-(2-hydroxy-5'-methyl-benzyl)-4-methylphenol,
2-(4-Hydroxyphenyl)-2-(2,4-dihydroxyphenyl)-propan,
Hexa-(4-(4-hydroxyphenyl-isopropyl)-phenyl)-orthoterephthalsäureester,
Tetra-(4-hydroxyphenyl)-methan,
Tetra-(4-(4-hydroxyphenyl-isopropyl)-phenoxy)-methan,
1,4-Bis-(4',4"-dihydroxytriphenyl)-methyl)-benzol und insbesondere
α,α`,α``-Tris-(4-hydroxyphenyl)-1,3,5-triisopropylbenzol
Weitere mögliche Verzweiger sind 2,4-Dihydroxybenzoesäure, Trimesinsäure, Cyanurchlorid und 3,3-Bis-(3-methyl-4-hydroxyphenyl)-2-oxo-2,3-dihydroindol.

Die gegebenenfalls mitzuverwendenden 0,05 bis 2 Mol-%, bezogen auf eingesetzte Diphenole, an Verzweigern, können mit den Diphenolen zusammen eingesetzt werden.

Kohlensäurediester im Sinne vorliegender Erfindung sind Di-$C_6$-$C_{14}$-Arylester, vorzugsweise die Diester von Phenol oder alkylsubstituierten Phenolen, also Diphenylcarbonat oder z.B. Dikresylcarbonat. Bezogen auf 1 Mol Bisphenol werden die Kohlensäurediester in 1,01 bis 1,30 Mol, bevorzugt in 1,02 bis 1,15 Mol eingesetzt.

Es ist darauf zu achten, daß die Reaktionskomponenten, also die Diphenole und die Kohlensäurediarylester frei von Alkali- und Erdalkaliionen sind, wobei Mengen von Kleiner 0,01 ppm an Alkali- und Erdalkaliionen toleriert werden können und der Wert von verseifbar Chlor < 0,05 ppm liegen sollte. Derart reine Kohlensäurediarylester bzw. Diphenole sind erhältlich, indem man die Kohlensäurediarylester bzw. Diphenole umkristallisiert, wäscht und/oder destilliert. Beim erfindungsgemäßen Verfahren soll der Gehalt an Alkali- und Erdalkalimetallionen sowohl im Diphenol als auch im Kohlensäurediester einen Wert von < 0,01 ppm betragen und der Gehalt an verseifbarem Chlor des Kohlensäurediesters einen Wert von 0,1 ppm nicht übersteigen.

Die Umesterungsreaktion der aromatischen Dihydroxyverbindung und des Kohlensäurediester in der Schmelze wird bevorzugt in zwei Stufen durchgeführt. In der ersten Stufe findet das Aufschmelzen der aromatischen Dihydroxyverbindung und des Kohlensäurediester bei Temperaturen von 80 -250°C, bevorzugt 100 - 230°C, besonders bevorzugt 120 - 190°C unter normalem Druck in 0 - 5 Stunden, bevorzugt 0,25 - 3 Stunden statt. Nach Zugabe des Katalysators wird durch Anlegen von Vakuum (bis zu 2 mm Hg) und Erhöhung der Temperatur (auf bis zu 260°C) durch Abdestillieren des Monophenols das Oligocarbonat aus der aromatischen Dihydroxyverbindung und dem Kohlensäurediester hergestellt. Das so hergestellte Oligocarbonat hat eine mittlere Gewichtsmittelmolmasse $M_w$ (ermittelt durch Messung der relativen Lösungsviskosität in Dichlormethan oder in Mischungen gleicher Gewichtsmengen Phenol/o-Dichlorbenzol geeicht durch Lichtstreuung) im Bereich von 2 000 bis 18 000 bevorzugt von 4 000 bis 15 000.

Die Molekulargewicht der Oligocarbonate der 1. Stufe richten sich danach, wie die gewünschte Endviskosität der Polycarbonate sein soll; so werden durch die Kondensation von niedrigmolekularen Oligocarbonaten niedrigmolekulare Polycarbonate in der 2. Stufe erhalten und durch die Kondensation von höhermolekularen Oligocarbonaten höhermolekulare Polycarbonate erhalten.

In der zweiten Stufe wird bei der Polykondensation durch weiteres Erhöhen der Temperatur auf 250 - 320°C, bevorzugt 270 - 295°C und einem Druck von < 2 mm Hg das verzweigungsarme Polycarbonat hergestellt.

Katalysatoren im Sinne des erfindungsgemäßen Verfahren sind alle anorganische oder organischen basischen Verbindungen beispielsweise: Lithium-, Natrium-, Kalium-, Cäsium-, Calzium-, Barium-, Magnesium-, -hydroxide, -carbonate, -halogenide, -phenolate, -diphenolate, -fluoride, -acetate, -phosphate, -hydrogenphosphate, boranate, Stickstoff- und Phosphorbasen wie beispielsweise Tetramethylammoniumhydroxid, Tetramethylammoniumacetat, Tetramethylammoniumfluorid, Tetramethylammoniumtetraphenylboranat, Tetraphenylphosphoniumfluorid, Tetraphenylphosphoniumtetraphenylboranat, Dimethyldiphenylammoniumhydroxid, Tetraethylammoniumhydroxid, DBU, DBN oder Guanidinsysteme wie beispielsweise das 1,5,7-Triazabicyclo-[4,4,0]-dec-5-en, 7-Phenyl-1,5,7-triazabicyclo-[4,4,0]-dec-5-en, 7-Methyl-1,5,7-triazabicyclo-[4,4,0]-dec-5-en, 7,7'-Hexyliden-di-1,5,7-triazabicyclo-[4,4,0]-dec-5-en, 7,7'-Decyliden-di-1,5,7-triazabicyclo-[4,4,0]-dec-5-en, 7,7'-Dodecyliden-di-1,5,7-triazabicyclo-[4,4,0]-dec-5-en oder Phosphazene wie beispielsweise das Phosphazen-Base $P_1$-t-Oct = tert.-Octyl-imino-tris-(dimethylamino)-phosphoran, Phosphazen-Base $P_1$-t-Butyl = tert.-Butyl-imino-tris-(dimethylamino)-phosphoran, BEMP = 2-tert.-Butylimino-2-diethylamino-1,3-dimethylperhydro-1,3-diaza-2-phosphorin.

Diese Katalysatoren werden in Mengen von $10^{-2}$ bis $10^{-8}$ Mol, bezogen auf 1 Mol Diphenol, eingesetzt.

Die Katalysatoren können auch in Kombination (zwei oder mehrere) miteinander eingesetzt werden.

Beim Einsatz von Alkali-/Erdalkalimetallkatalysatoren kann es vorteilhaft sein, die Alkali-/Erdalkalimetallkatalysatoren zu einem späteren Zeitpunkt (z.B. nach der Oligocarbonatsynthese bei der Polykondensation in der zweiten Stufe) zuzusetzen. Die Zugabe des Alkali-/Erdalkalimetallkatalysators kann z.B. als Feststoff oder als Lösung in Wasser, Phenol, Oligocarbonat, Polycarbonat erfolgen. Die Mitverwendung von Alkali- bzw. Erdalkalimetallkatalysatoren widerspricht nicht der vorstehend erwähnten Forderung nach Reinheit der Reaktionspartner.

Die Reaktion der aromatischen Dihydroxyverbindung und des Kohlensäurediester zum Polycarbonat kann im Sinne des erfindungsgemäßen Verfahrens diskontinuierlich oder bevorzugt kontinuierlich durchgeführt werden, beispielsweise in Rührkesseln, Dünnschichtverdampfern, Fallfilmverdampfern, Rührkesselkaskaden, Extrudern, Knetern, einfachen Scheibenreaktoren und Hochviskosscheibenreaktoren.

Die aromatischen Polycarbonate des erfindungsgemäßen Verfahrens sollen mittlere Gewichtsmolmassen $M_w$ von 18 000 bis 80 000 vorzugsweise 19 000 - 50 000 haben, ermittelt durch Messung der relativen Lösungsviskosität in Dichlormethan oder in Mischungen gleicher Gewichtsmengen Phenol/o-Dichlorbenzol geeicht durch Lichtstreuung.

Die OH-Endgruppengehalte der Polycarbonate im Sinne des erfindungsgemäßen Verfahrens müssen < 35 %, bevorzugt < 30 %, besonders bevorzugt < 25 % liegen, damit eine Restmonomerreduzierung unter Erhalt des Molekulargewichts des Polycarbonats erzielt werden kann (vgl. Beispiele/Vergleichsbeispiele).

Zur Begrenzung der mittleren Gewichtsmolmassen $M_w$ der Polymeren können in bekannter Weise (EP 360 578) Molmassenregler, wie beispielsweise Alkylphenol, in den berechneten Mengen eingesetzt werden.

Weitgehend frei von unerwünschten Fehlstellen im Polycarbonat im Sinne des erfindungsgemäßen Verfahrens heißt, daß der Gehalt an Verzweiger der Formel (II):

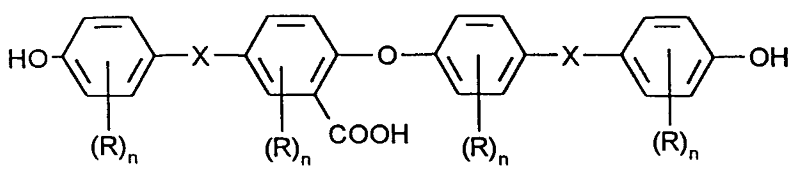

mit

X = $C_1$-$C_8$-Alkyliden oder Cycloalkyliden, S oder eine Einfachbildung und

R = $CH_3$, Cl oder Br und n Null, 1 oder 2 ist,

im Polycarbonat einen Wert nach Totalverseifung und HPLC-Bestimmung von 75 ppm nicht übersteigt.

Die Säure-Komponente kann eine Lewis- oder eine Brönsted-Säure oder ein Ester einer starken Säuren sein. Der pKa-Wert der Säure sollte nicht größer als 5, bevorzugt < 3 sein. Die Säure-Komponente bzw. deren Ester wird zugegeben, um den verwendeten Katalysator zu neutralisieren bzw. stark abzuschwächen. Entsprechend muß die Konzentration der sauren Komponente so gewählt sein, daß sie den eingesetzten Katalysator, der im fertigen Polycarbonat noch vorhanden ist, neutralisieren kann. Daher wird die Säure-Komponente in Konzentration von 0,01 - 100 Mol bevorzugt in Konzentrationen von 0,1 bis 10 Mol pro Mol Katalysator eingesetzte.

Beispiele für geeignete Säure-Komponenten sind: Phosphorsäure, phosphorige Säure, Hypophosphorsäure, Polyphosphorsäuren, Borsäure, Salzsäure, Schwefelsäure, Ascorbinsäure, Oxalsäure, Benzoesäure, Salicylsäure, Ameisensäure, Essigsäure, Adipinsäure, Zitronensäure, Toluolsulfonsäure, Salpetersäure, Terephthalsäure, Isophtthalsäure, Säurechloride wie Chlorameisenphenylester, Stearinsäurechlorid, Benzoylchlorid, Ester und Halbester der oben genannten Säuren wie beispielsweise Toluolsulfonsäureester, Phosphorsäureester, Phosphorigsäureester, Phosphonsäureester, Dimethylsulfat, Borsäureester.

Die Zudosierung der sauren Komponente zum fertigen Polycarbonat kann durch kontinuierliche (z.B. mittels Zahnradpumpe, Seitenextruder) oder diskontinuierliche Zudosierung erfolgen. Die saure Komponente kann gasförmig, in Lösung, Schmelze oder als Feststoff, als Masterbatch z.B. in Polycarbonat oder im Kohlensäurediester zudosiert werden. Es kann vorteilhaft sein, nach der Zudosierung eine Verweilzeit zur Neutralisationsreaktion mit dem Polycarbonat zu gewähren (z.B. Verweilrohr, statischer Mischer, Kneter, Schnecke, Extruder).

Nach der Neutralisation erfolgt dann die Partialdruckerniedrigung, um die Restmonomere des Polycarbonats auszudampfen. Die Partialdruckemiedrigung kann durch Anlegen von Vakuum, Zufuhr großer Mengen eines Inertgases oder eine Kombination von Vakuum und Inertgas (Schleppgastechnologie) erfolgen. Wichtig ist, daß während der Partialdruckerniedrigung für die Polycarbonatschmelze eine große Oberfläche bereitgestellt wird, damit die Restmonomeren schnell aus dem Polycarbonat entfernt werden können. Dies kann beispielsweise auf einer Schnecke mit Vakuumteil oder einem Kneter mit Vakuumteil erfolgen. Die Temperatur bei diesem Schritt sollte zwischen 240°C und 400°C, bevorzugt zwischen 270°C und 320°C liegen. Falls die Partialdruckerniedrigung durch Anlegen von Vakuum erfolgt, so sollte das Vakuum zwischen 0,01 mbar und 10 mbar bevorzugt zwischen 2 mbar und 0,1 mbar liegen. Die Verweilzeit der Polycarbonatschmelze im Reaktor sollte zwischen 0,1 min und 3 Stunden, bevorzugt zwischen 1 min und 30 min liegen.

Restmonomere im Sinne erfindungsgemäßen Verfahrens sind die bei der Umesterung gebildeten Monophenole, also bevorzugt Phenol, der eingesetzte Kohlensäurediester, also bevorzugt Diphenylcarbonat und die eingesetzte Dihydroxyverbindung, also bevorzugt das Bisphenol-A. Wird das Polycarbonat nicht neutralisiert und/oder liegen die OH-Endgruppengehalte der Polycarbonate < 35 %, so kann keine Restmonomerreduzierung bei konstantem Molekulargewicht des Polycarbonats erzielt werden (vgl. Beispiele).

Da die Restmonomerkonzentration an sich schon eine Funktion des Molekulargewichts des Polycarbonats ist, je höher das Molekulargewicht, desto geringer die Restmonomerkonzentrationen im Polycarbonat, muß für die Angabe der Restmonomerreduzierung eine Unterscheidung für die verschiedenen Molekulargewichtsbereiche mit Schwankungsbreiten der Restmonomeren für die Polycarbonate angegeben werden. Außerdem ist die Restmonomerzusammensetzung (relative Konzentration an Monophenolen, Dihydroxyverbindung und Kohlensäurediester) noch eine Funktion des phenolischen OH-Gehalts bzw. der OH-Endgruppengehalte. Je höher die Gehalte an OH-Endgruppen liegen, desto höher ist die relative Konzentration an Monophenolen und Dihydroxyverbindung im Verhältnis zum Kohlensäurediester (vgl. Vergleichsbeispiele und Beispiele). Liegen die jeweiligen Restmonomerkonzentrationen im Roh-Polycarbonat schon relativ niedrig in ihrem unten genannten Schwankungsbereich, so werden entsprechend nach der Restmonomerreduzierung besonders Kleine Werte gefunden (vgl. Vergleichsbeispiele und Beispiele).

So bedeutet die Restmonomerreduzierung der Polycarbonate im Sinne des erfindungsgemäßen Verfahrens für mittlere Molekulargewichte $M_w$ des Polycarbonats im Bereich von 18 000 bis 25 000, daß die Gehalte der Monophenole im Schwankungsbereich von 200 bis 60 ppm auf < 30 ppm, bevorzugt < 15 ppm reduziert werden, die Gehalte der Kohlensäurediester im Schwankungsbereich von 1 200 bis 400 ppm auf < 100 ppm, bevorzugt < 50 ppm, besonders bevorzugt < 15 ppm reduziert werden, die Gehalte der Dihydroxyverbindungen im Schwankungsbereich von 100 bis 30 ppm auf < 10 ppm, bevorzugt < 5 ppm reduziert werden.

Die Restmonomerreduzierung der Polycarbonate im Sinne des erfindungsgemäßen Verfahrens für mittlere Molekulargewichte $M_w$ des Polycarbonats im Bereich von 25 000 bis 35 000 bedeutet, daß die Gehalte der Monophenole im Schwankungsbereich von 100 bis 40 ppm auf < 25 ppm, bevorzugt < 10 ppm reduziert werden, die Gehalte der Kohlensäurediester im Schwankungsbereich von 500 bis 200 ppm auf < 80 ppm, bevorzugt < 40 ppm, besonders bevorzugt < 10 ppm reduziert werden, die Gehalte der Dihydroxyverbindungen im Schwankungsbereich von 80 bis 20 ppm auf < 10 ppm, bevorzugt < 5 ppm reduziert werden.

Die Restmonomerreduzierung der Polycarbonate im Sinne des erfindungsgemäßen Verfahrens für mittlere Molekulargewichte $M_w$ des Polycarbonats im Bereich von 35 000 bis 60 000 bedeutet, daß die Gehalte der Monophenole im Schwankungsbereich von 80 bis 30 ppm auf < 15 ppm, bevorzugt < 5 ppm reduziert werden, die Gehalte der Kohlensäurediester im Schwankungsbereich von 350 bis 150 ppm auf < 50 ppm, bevorzugt < 20 ppm, besonders bevorzugt < 5 ppm reduziert werden, die Gehalte der Dihydroxyverbindungen im Schwankungsbereich von 50 bis 15 ppm auf < 5 ppm, bevorzugt < 5 ppm reduziert werden.

Molekulargewichtskonstanz bei der Restmonomerreduzierung im Sinne des erfindungsgemäßen Verfahrens bedeutet für das Polycarbonat, daß das $M_w$ des Polycarbonats nach der Herstellung und dem Verfahren der Restmonomerreduzierung (Neutralisation, Partialdruckerniedrigung) nicht mehr als eine Veränderung des $M_w$s von 2 000, bevorzugt 1 000 erfährt.

Zur Verbesserung der Eigenschaften können den erfindungsgemäß hergestellten Polycarbonaten Hilfs- und Verstärkungsstoffe zugemischt werden. Als solche sind u.a. in Betracht zu ziehen: Thermo-, UV- und Hydrolyse-Stabilisatoren, Fließhilfsmittel, Entformungsmittel, Brandschutzmittel, Pigmente, fein zerteilte Mineralien, Faserstoffe, Antioxidantien z.B. Alkyl- und Arylphosphite, -phosphate, -phosphane, Epoxide, niedermolekulare Carbonsäureester, Halogenverbindungen, Salze, Kreide, Quarzmehl, Glas- und Kohlenstoffasern, sterisch gehinderte Phenole, Amine.

Weiterhin können den erfindungsgemäßen Polycarbonaten auch andere Polymere zugemischt werden, z.B. Polyolefine, Polystyrol.

Der Zusatz dieser Stoffe erfolgt vorzugsweise auf herkömmlichen Aggregation zum fertigen Polycarbonat, kann jedoch, je nach den Erfordernissen, auf einer anderen Stufe des erfindungsgemäßen Verfahrens erfolgen.

Darüber hinaus ist für besondere Anwendungen auch die Modifizierung der Polycarbonate durch Einkondensation von Blöcken, Segmenten und Comonomeren möglich, z.B. Siloxanblöcken mit OH-Endgruppen, aromatische und aliphatische Polyester mit OH- und Carbonsäure-Endgruppen, Polyphenylensulfid-Blöcke mit OH-Endgruppen, Polyphenylenoxid-Blöcke mit OH-Endgruppen.

Die erfindungsgemäß hergestellten Polycarbonate eignen sich für die üblichen Anwendungsgebiete, also in der Elektrotechnik, im Bausektor und im Kraftfahrzeugbau somit z.B. als Trägermaterial für Datenspeicher, für Stegplatten zur Abdeckung oder als Gehäusematerial von elektronischen Geräten.

## Beispiele

### Vergleichsbeispiel 1

In einem 500 ml Dreihalskolben mit Rührer, Innenthermometer und Vigreuxkolonne (30 cm, verspiegelt), mit Brücke werden 114,15 g (0,500 Mol) Bisphenol-A und 110,21 g (0,515 Mol) Diphenylcarbonat eingewogen. Die Apparatur wird durch Anlegen von Vakuum und Spülen mit Stickstoff (3mal) vom Luftsauerstoff befreit und das Gemisch auf 150°C aufgeheizt. Jetzt werden 0,0007 g ($1*10^{-3}$ Mol-%) Triazabicyclo-[4,4,0]-dec-5-en, bezogen auf Bisphenol-A, als 1 %ige wäßrige Lösung zugegeben und das entstehende Phenol bei 100 mbar abdestilliert. Gleichzeitig wird die Temperatur bis auf 250°C gesteigert. Nach 1 Stunde wird das Vakuum auf 10 mbar verbessert und anschließend auf 2 mbar. Jetzt werden dem entstandenen Oligocarbonat 0,00029 g ($5*10^{-4}$ Mol-%) Natriumphenolat, bezogen auf BPA, zugegeben. Durch Absenken des Vakuums auf 0,5 mbar und Temperaturerhöhung auf 280°C wird innerhalb von 90 min ein lösungsmittelfreies Polycarbonat mit einer relativen Lösungsviskosität von 1,278 (Dichlormethan, 25°C, 5 g/l) erhalten. Der phenolische OH-Wert dieses Polycarbonats beträgt 1 250 ppm (entspricht einem OH-Endgruppengehalt von 49 %). Das Polycarbonat weist Restmonomergehalte von Phenol (89 ppm), Diphenylcarbonat (120 ppm) und BPA (72 ppm) auf. Diesem Polycarbonat werden nun 20 ppm Phosphorsäure zugesetzt und die Schmelze im Hochvakuum (0,3 mbar) 1 Stunde intensiv gerührt. Das Molekulargewicht des Polycarbonats erhöht sich nach dieser Zeit auf eine relative Lösungsviskosität von 1,312 (Dichlormethan, 25°C, 5 g/l). Die Restmonomergehalte sind Phenol (75 ppm), Diphenylcarbonat (102 ppm) und BPA (48 ppm).

### Vergleichsbeispiel 2

Wie Vergleichsbeispiel 1, nur wird auf die Zugabe der Säure verzichtet. Das intermediär gebildete Polycarbonat hat wie im Vergleichsbeispiel 1 eine relative Lösungsviskosität von 1,278 (Dichlormethan, 25°C, 5 g/l) einen phenolisch OH-Wert von 1 250 ppm (entspricht einem OH-Endgruppengehalt von 49 %) und weist Restmonomergehalte von Phenol (89 ppm), Diphenylcarbonat (120 ppm) und BPA (72 ppm) auf. Man erhält dann nach der weiteren Stunde im Hochvakuum ein Polycarbonat mit einer relativen Lösungsviskosität von 1,345 (Dichlormethan, 25°C, 5 g/l). Die Restmonomergehalte sind Phenol (52 ppm), Diphenylcarbonat (82 ppm) und BPA (34 ppm).

### Vergleichsbeispiel 3

Wie Vergleichsbeispiel 1, nur werden 111,28 g (0,52 Mol) Diphenylcarbonat eingewogen. Man erhält dann vor der Phosphorsäurezugabe ein lösungsmittelfreies Polycarbonat mit einer relativen Lösungsviskosität von 1,269 (Dichlormethan, 25°C, 5 g/l) erhalten. Der phenolische OH-Wert dieses Polycarbonats beträgt 985 ppm (entspricht einem OH-Endgruppengehalt von 39 %). Das Polycarbonat weist Restmonomergehalte von Phenol (80 ppm), Diphenylcarbonat (200 ppm) und BPA (65 ppm) auf. Diesem Polycarbonat werden nun 20 ppm Phosphorsäure zugesetzt und die Schmelze im Hochvakuum (0,3 mbar) 1 Stunde intensiv gerührt. Das Molekulargewicht des Polycarbonats erhöht sich nach dieser Zeit auf eine relative Lösungsviskosität von 1,301 (Dichlormethan, 25°C, 5 g/l). Die Restmonomergehalte sind Phenol (69 ppm), Diphenylcarbonat (150 ppm) und BPA (44 ppm).

### Beispiel 1

Wie Vergleichsbeispiel 1, nur werden 113,42 g (0,53 Mol) Diphenylcarbonat eingewogen. Man erhält dann vor der Phosphorsäurezugabe ein lösungsmittelfreies Polycarbonat mit einer relativen Lösungsviskosität von 1,265 (Dichlormethan, 25°C, 5 g/l) erhalten. Der phenolische OH-Wert dieses Polycarbonats beträgt 385 ppm (entspricht einem OH-Endgruppengehalt von 15 %). Das Polycarbonat weist Restmonomergehalte von Phenol (62 ppm), Diphenylcarbonat (340 ppm) und BPA (35 ppm) auf. Diesem Polycarbonat werden nun 20 ppm Phosphorsäure zugesetzt und die Schmelze im Hochvakuum (0,3 mbar) 1 Stunde intensiv gerührt. Das Molekulargewicht des Polycarbonats bleibt nach dieser Zeit praktisch konstant, da eine relativen Lösungsviskosität von 1,267 (Dichlormethan, 25°C, 5 g/l) vorliegt. Die Restmonomergehalte sind Phenol (15 ppm), Diphenylcarbonat (29 ppm) und BPA (8 ppm).

**Beispiel 2**

Wie Beispiel 1, nur werden anstatt der Phosphorsäure 25 ppm p-Toluolsulfonsäuremethylbutylester zugesetzt. Man erhält dann ein lösungsmittelfreies Polycarbonat mit einer relativen Lösungsviskosität von 1,270 (Dichlormethan, 25°C, 5 g/l) erhalten. Die Restmonomergehalte sind Phenol (13 ppm), Diphenylcarbonat (35 ppm) und BPA (8 ppm).

**Beispiel 3**

Wie Beispiel 1, nur wird anstatt 90 min bei 280°C nur 45 min bei 0,5 mbar gerührt. Man erhält dann ein Polycarbonat mit einer relativen Lösungsviskosität von 1,205 (Dichlormethan, 25°C, 5 g/l). Der phenolische OH-Wert dieses Polycarbonats beträgt 680 ppm (entspricht einem OH-Endgruppengehalt von 20 %). Das Polycarbonat weist Restmonomergehalte von Phenol (105 ppm), Diphenylcarbonat (520 ppm) und BPA (48 ppm) auf. Diesem Polycarbonat werden nun 20 ppm Phosphorsäure zugesetzt und die Schmelze im Hochvakuum (0,3 mbar) 1 Stunde intensiv gerührt. Das Molekulargewicht des Polycarbonats bleibt nach dieser Zeit praktisch konstant, da eine relative Lösungsviskosität von 1,209 (Dichlormethan, 25°C, 5 g/l) vorliegt. Die Restmonomergehalte sind Phenol (15 ppm), Diphenylcarbonat (39 ppm) und BPA (9 ppm).

**Beispiel 4**

Wie Beispiel 1, nur wird anstatt 90 min bei 280°C nur 120 min bei 0,5 mbar gerührt. Man erhält dann ein Polycarbonat mit einer relativen Lösungsviskosität von 1,305 (Dichlormethan, 25°C, 5 g/l). Der phenolische OH-Wert dieses Polycarbonats beträgt 520 ppm (entspricht einem OH-Endgruppengehalt von 23 %). Das Polycarbonat weist Restmonomergehalte von Phenol (48 ppm), Diphenylcarbonat (235 ppm) und BPA (27 ppm) auf. Diesem Polycarbonat werden nun 20 ppm Phosphorsäure zugesetzt und die Schmelze im Hochvakuum (0,3 mbar) 1 Stunde intensiv gerührt. Das Molekulargewicht des Polycarbonats bleibt nach dieser Zeit praktisch konstant, da eine relative Lösungsviskosität von 1,307 (Dichlormethan, 25°C, 5 g/l) vorliegt. Die Restmonomergehalte sind Phenol (8 ppm), Diphenylcarbonat (16 ppm) und BPA (5 ppm).

**Beispiel 5**

5 130 g (22,5 Mol) Bisphenol-A, 5 104 g (23,85 Mol) Diphenylcarbonat und 75 mg $PPh_4BPh_4$ ($5*10^{-4}$ Mol-%) werden in einem 25 l Rührbehälter eingewogen. Der Behälter wird mit Stickstoff inertisiert und die Rohstoffe werden aufgeschmolzen durch Aufheizen auf 200°C in 15 Minuten. Bei einer Massetemperatur von 100°C wird der Rührer eingeschaltet und ein Vakuum von 300 mbar angelegt. Die Temperatur wird eine Stunde bei 200°C gehalten und freigesetztes Phenol über eine Kolonne abdestilliert. Innerhalb einer weiteren Stunde wird die Temperatur auf 250°C erhöht und das Vakuum auf 100 mbar und anschließend bei 250°C in 30 Minuten auf 5 mbar verbessert. Man erhält ein Oligocarbonat mit einer relativen Lösungsviskosität von 1,156 (Dichlormethan, 25°C, 5 g/l). Nach Erhöhung der Massetemperatur auf 290°C und belüften mit Stickstoff werden 13 mg Natriumphenolat ($5*10^{-4}$ Mol-%) zugegeben, Hochvakuum (1 mbar) angelegt und bei 290°C 2,0 h polykondensiert. Nach Belüften mit Stickstoff werden dem Polycarbonat 10 ppm p-Toluolsulfonsäure in Form eines 5 %igen Masterbatches zugeführt, weitere 5 Minuten gerührt und anschließend wird das Polycarbonat aus dem Kessel ausgetragen und granuliert. Die relative Lösungsviskosität des isolierten Polycarbonats beträgt 1,297 (Dichlormethan, 25°C, 5 g/l). Der phenolische OH-Wert dieses Polycarbonats beträgt 170 ppm (entspricht einem OH-Endgruppengehalt von 7,5 %). Das Polycarbonat weist Restmonomergehalte von Phenol (42 ppm), Diphenylcarbonat (230 ppm) und BPA (21 ppm) auf. Auf einer ZSK 32 (60 Upm; 280°C, 1 kg/h, 0,2 mbar) wird jetzt die Restmonomerreduzierung durchgeführt und polykondensiert. Das Molekulargewicht des Polycarbonats bleibt praktisch konstant, da eine relative Lösungsviskosität von 1,295 (Dichlormethan, 25°C, 5 g/l) vorliegt. Die Restmonomergehalte sind dann Phenol (5 ppm), Diphenylcarbonat (3 ppm) und BPA (4 ppm).

**Vergleichsbeispiel 4**

Wie Beispiel 4, nur es werden 5 130 g (22,5 Mol) Bisphenol-A, 5 007 g (23,4 Mol) Diphenylcarbonat eingewogen. Man erhält ein Polycarbonat mit einer relativen Lösungsviskosität von 1,295 (Dichlormethan, 25°C, 5 g/l). Der phenolische OH-Wert dieses Polycarbonats betragt 1 300 ppm (entspricht einem OH-Endgruppengehalt von 56 %). Das Polycarbonat weist Restmonomergehalte von Phenol (79 ppm), Diphenylcarbonat (160 ppm) und BPA (75 ppm) auf. Auf einer ZSK 32 (60 Upm; 280°C, 1 kg/h, 0,2 mbar) wird jetzt die Restmonomerreduzierung durchgeführt und polykondensiert. Das Molekulargewicht des Polycarbonats steigt auf eine relative Lösungsviskosität von 1,370 (Dichlormethan, 25°C, 5 g/l) vorliegt. Die Restmonomergehalte sind dann Phenol (52 ppm), Diphenylcarbonat (85 ppm) und BPA (62 ppm).

## Patentansprüche

1. Umesterungsverfahren zur Herstellung von thermoplastischen, lösungsmittelfreien, restmonomerarmen Polycarbonaten, dadurch gekennzeichnet, daß man ein nach dem Umesterungsverfahren hergestelltes Polycarbonat mit einem OH-Endgruppengehalt von < 35 % mit einer sauren Komponente versetzt und anschließend durch Partialdruckerniedrigung zu einem restmonomerarmen Polycarbonat unter Beibehaltung des Molekulargewichts gelangt.

2. Umesterungsverfahren zur Herstellung von thermoplastischen, lösungsmittelfreien, restmonomerarmen Polycarbonaten, gemäß Anspruch 1, dadurch gekennzeichnet, daß für mittlere Molekulargewichte $M_w$ des Polycarbonats im Bereich von 18 000 bis 25 000 die Gehalte der Monophenole im Schwankungsbereich von 200 bis 60 ppm auf < 30 ppm reduziert werden, die Gehalte der Kohlensäurediester im Schwankungsbereich von 1 200 bis 400 ppm auf < 100 ppm reduziert werden, die Gehalte der Dihydroxyverbindungen im Schwankungsbereich von 100 bis 30 ppm auf < 10 ppm reduziert werden, für mittlere Molekulargewichte $M_w$ des Polycarbonats im Bereich von 25 000 bis 35 000 die Gehalte der Monophenole im Schwankungsbereich von 100 bis 50 ppm auf < 25 ppm reduziert werden, die Gehalte der Kohlensäurediester im Schwankungsbereich von 500 bis 250 ppm auf < 80 ppm reduziert werden, die Gehalte der Dihydroxyverbindungen im Schwankungsbereich von 80 bis 25 ppm auf < 10 ppm reduziert werden, für mittlere Molekulargewichte $M_w$ des Polycarbonats im Bereich von 35 000 bis 60 000 die Gehalte der Monophenole im Schwankungsbereich von 80 bis 30 ppm auf < 15 ppm, reduziert werden, die Gehalte der Kohlensäurediester im Schwankungsbereich von 350 bis 150 ppm auf < 50 ppm reduziert werden, die Gehalte der Dihydroxyverbindungen im Schwankungsbereich von 50 bis 25 ppm auf < 10 ppm reduziert werden.

3. Umesterungsverfahren zur Herstellung von thermoplastischen, lösungsmittelfreien, restmonomerarmen Polycarbonaten, gemäß Anspruch 1 und 2, dadurch gekennzeichnet, daß das Polycarbonat bei der Restmonomerreduzierung im Molekulargewicht eine Veränderung von nicht mehr als 2 000 erfährt.

4. Umesterungsverfahren zur Herstellung von thermoplastischen, lösungsmittelfreien, restmonomerarmen Polycarbonaten, gemäß Anspruch 1 bis 3, dadurch gekennzeichnet, daß die Neutralisation des alkalischen Umesterungskatalysators mit einer sauren Komponente bzw. deren Ester erfolgt, die einen pKa-Wert von < 5 hat.

5. Umesterungsverfahren zur Herstellung von thermoplastischen, lösungsmittelfreien, restmonomerarmen Polycarbonaten, gemäß Anspruch 1 bis 4, dadurch gekennzeichnet, daß die Partialdruckerniedrigung bei der Restmonomerreduzierung durch Anlegen von Vakuum, große Mengen Inertgas oder eine Kombination von beiden erwirkt werden kann.

6. Aromatische Polycarbonate, die gemäß Anspruch 1 hergestellt wurden, mit mittleren Molekulargewichte $M_w$ im Bereich von 18 000 bis 25 000 bei denen die Gehalte an Monophenolen < 30 ppm, die Gehalte an Kohlensäurediester < 100 ppm und die Gehalte der Dihydroxyverbindungen < 10 ppm sind.

7. Aromatische Polycarbonate, die gemäß Anspruch 1 hergestellt wurden, mit mittleren Molekulargewichte $M_w$ im Bereich von 25 000 bis 35 000 bei denen die Gehalte an Monophenolen < 25 ppm, die Gehalte an Kohlensäurediester < 80 ppm und die Gehalte der Dihydroxyverbindungen < 10 ppm sind.

8. Aromatische Polycarbonate, die gemäß Anspruch 1 hergestellt wurden, mit mittleren Molekulargewichte $M_w$ im Bereich von 35 000 bis 60 000 bei denen die Gehalte an Monophenolen < 15 ppm, die Gehalte an Kohlensäurediester < 50 ppm und die Gehalte der Dihydroxyverbindungen < 10 ppm sind.

Europäisches Patentamt

# EUROPÄISCHER RECHERCHENBERICHT

Nummer der Anmeldung
EP 95 11 6239

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| D,A | DE-B-10 31 512 (BAYER AG)<br>* Ansprüche 1,2 *<br>--- | 1-8 | C08G64/42<br>C08G64/30<br>C08G64/40 |
| A | EP-A-0 577 849 (DAICEL CHEM) 12.Januar 1994<br>* Ansprüche 1,2 *<br>--- | 1-8 | |
| D,A | EP-A-0 435 124 (GE PLASTICS, JAPAN LIMITED)<br>* Ansprüche 1-20 *<br>----- | 1-8 | |

| RECHERCHIERTE SACHGEBIETE (Int.Cl.6) |
|---|
| C08G |

Der vorliegende Recherchenbericht wurde für alle Patentansprüche erstellt

| Recherchenort | Abschlußdatum der Recherche | Prüfer |
|---|---|---|
| DEN HAAG | 15.Februar 1996 | Decocker, L |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)